# FASCICULE DE BREVET EUROPEEN

(11) **EP 1 115 977 B1**
(45) Date de publication et mention de la délivrance du brevet: **19.05.2004**
(21) Numéro de dépôt: 00953263.1
(22) Date de dépôt: 19.07.2000
(51) Int. Cl.: F03D 1/02, F03D 9/00, F03D 7/00

(54) **EOLIENNE AVEC ROTORS CONTRAROTATIFS**
WINDTURBINE MIT GEGENLÄUFIGEN ROTOREN
WIND TURBINE WITH COUNTER ROTATING ROTORS

(30) Priorité: 22.07.1999 FR 9909551
(43) Date de publication de la demande: 18.07.2001
(73) Titulaire: JEUMONT INDUSTRIE, 92400 Courbevoie (FR)
(72) Inventeur: DEBLESER, Yves, B-7850 Enghien (BE)
(74) Mandataire: Bouget, Lucien
(86) Numéro de dépôt international: PCT/FR2000/002077
(87) Numéro de publication internationale: WO 2001/007784

(56) Documents cités:
- DE-A- 3 844 505
- US-A- 3 740 565
- US-A- 4 345 161
- US-A- 5 315 159

## Description

L'invention concerne un dispositif de captage d'énergie éolienne pour la production d'énergie étectrique voir DE-A-38 44 505.

On connaît des dispositifs de captage de l'énergie fournie par le vent ou éoliennes qui comportent un mât vertical, une nacelle montée rotative autour d'un axe vertical sur la partie supérieure du mât et au moins une unité de captage portée par la nacelle. L'unité de captage de l'énergie éolienne comporte au moins une hélice constituée d'un moyeu monté rotatif sur la nacelle autour d'un axe sensiblement horizontal et au moins deux pales (généralement deux ou trois pales) fixées sur le moyeu dans des directions sensiblement radiales.

La nacelle qui est généralement carénée est orientée, de manière automatique ou de manière commandée, pour que l'axe de rotation horizontal du moyeu soit dirigé suivant la direction du vent et pour que l'hélice soit mise en rotation à une certaine vitesse qui est fonction de la vitesse du vent.

L'énergie récupérée par l'hélice de l'éolienne peut être utilisée de différentes manières et en particulier cette énergie peut être convertie en énergie électrique qui peut être utilisée localement à l'endroit où se trouve l'éolienne ou envoyée dans un réseau de distribution.

Dans ce cas, l'unité de captage de l'éolienne constitue également une unité de production d'énergie électrique et comporte un générateur électrique ayant au moins un rotor solidaire de l'hélice et au moins un stator fixé sur la nacelle.

Un premier problème rencontré dans le cas des unités de captage d'énergie éolienne et de production d'énergie électrique est relatif à la nécessité de faire tourner le rotor du générateur électrique à une vitesse suffisante, par rotation de l'hélice. Pour cela, il est généralement nécessaire d'utiliser un multiplicateur mécanique entre l'hélice et le rotor du générateur. Un tel dispositif rend plus complexe la construction et la maintenance de l'éolienne.

On a également proposé d'associer au moins deux hélices montées sur un même axe et tournant en sens inverse l'une de l'autre pour entraîner le générateur électrique. Dans ce cas, il est nécessaire de prévoir des moyens de liaison mécaniques entre les deux hélices pour assurer l'entraînement et le réglage de la vitesse de rotation du rotor du générateur électrique.

De tels dispositifs de liaison mécanique sont complexes et augmentent considérablement les dimensions de la partie fonctionnelle de l'éolienne.

Dans le cas de l'utilisation de deux hélices contrarotatives, une première hélice est dirigée face au vent et la seconde hélice, qui est disposée à la suite de la première hélice dans la direction du vent, utilise au moins une partie de l'énergie récupérable du vent qui n'a pas été captée par la première hélice.

Les dispositifs de liaison mécaniques entre les hélices ne permettent généralement pas d'assurer un fonctionnement idéal des deux hélices, quelle que soit la vitesse du vent, c'est-à-dire un fonctionnement tel qu'on produise une énergie cumulée, sur une période donnée, par exemple d'un an, qui soit la plus proche possible .de l'énergie maximale récupérable cumulée.

En d'autres termes, on ne connaissait pas jusqu'ici de moyen permettant d'optimiser le fonctionnement de la première et de la seconde hélices contrarotatives, en fonction de la vitesse du vent.

Lorsque la vitesse du vent augmente, à partir de la vitesse de démarrage des hélices de l'éolienne, il se produit ou on provoque, pour une certaine vitesse du vent, un décrochage aérodynamique assurant une certaine régulation du fonctionnement de l'éolienne. Il est nécessaire de prévoir des moyens mécaniques, par exemple des dispositifs de réglage de l'angle de calage des pales des hélices des éoliennes, pour obtenir le décrochage ou la mise en drapeau des hélices, c'est-à-dire dans une position non soumise au vent, dans des conditions voulues. Ces dispositifs mécaniques-sont complexes et peuvent accroître les risques de rupture et l'usure de l'éolienne en service.

En outre, l'entraînement du rotor du ou des générateurs électriques, à partir d'une ou plusieurs hélices, nécessite l'utilisation de moyens mécaniques qui augmentent la dimension des unités de captage, en particulier dans la direction de l'axe de rotation des hélices et des rotors de générateur.

Il est donc préférable d'assurer une liaison directe entre l'hélice et le rotor du générateur. Ce type d'entraînement ne peut être utilisé dans le cas de générateurs électriques de type courant. L'utilisation de générateurs de type discoïde à champ axial peut permettre de faciliter la liaison avec l'hélice de l'éolienne et augmenter la compacité de l'unité de captage de l'éolienne dans la direction axiale. Toutefois, de tels générateurs de type discoïde n'ont jamais été utilisés. pour équiper des éoliennes à hélices contrarotatives.

Le but de l'invention est donc de proposer un dispositif de captage d'énergie éolienne pour la production d'énergie électrique comportant un mât vertical, une nacelle montée rotative autour d'un axe vertical sur la partie supérieure du mât et au moins une unité de captage comportant au moins une hélice constituée d'un moyeu monté rotatif sur la nacelle autour d'un axe sensiblement horizontal et au moins deux pales fixées sur le moyeu dans des directions sensiblement radiales et un générateur électrique ayant au moins un rotor relié à l'hélice de manière à être entraîné en rotation par l'hélice et au moins un stator fixé sur la nacelle, ce dispositif pouvant être obtenu de manière compacte tout en présentant une forte puissance installée et permettant d'augmenter l'énergie produite au cours d'une période de référence, par exemple pendant une année.

Dans ce but, le dispositif de captage suivant l'invention comporte une première et une seconde unités de captage comprenant respectivement une première et une seconde hélices contrarotatives disposées de part et d'autre de l'axe vertical du mât, dont les moyeux sont montés rotatifs de manière indépendante l'un de l'autre autour d'axes alignés et un premier et un second générateurs électriques réalisés sous forme discoïde comprenant chacun:
- au moins un rotor ayant au moins une partie en forme de disque solidaire de l'hélice correspondante,
- au moins un stator ayant au moins une partie en forme de disque en vis-à-vis du rotor, et
- des moyens électroniques de puissance associés au générateur permettant d'assurer le réglage de la vitesse du rotor de manière indépendante sur chacune des unités de captage.

L'invention est également relative à un procédé de réglage du dispositif de captage pour optimiser son fonctionnement, de manière à produire une énergie cumulée maximale, pendant une période de référence.

Afin de bien faire comprendre l'invention, on va décrire à titre d'exemple en se référant aux figures jointes en annexe, un dispositif de captage d'énergie éolienne et de production d'énergie électrique suivant l'invention et son utilisation de manière optimisée, pour produire une quantité maximale d'énergie cumulée pendant une période de référence.
La figure 1 est une vue en coupe axiale du dispositif de captage suivant l'invention.
La figure 2 est une vue agrandie d'une partie de la figure 1 montrant le générateur électrique de l'une des unités de captage.
La figure 3 est un diagramme donnant en fonction de la vitesse du vent la puissance fournie par chacune des unités de captage et la puissance totale fournie par le dispositif ainsi que la répartition en durée des vitesses du vent, pendant une période de référence d'un an.
La figure 4 est un diagramme donnant en fonction de la vitesse du vent la production annuelle d'énergie par le dispositif de captage suivant l'invention.

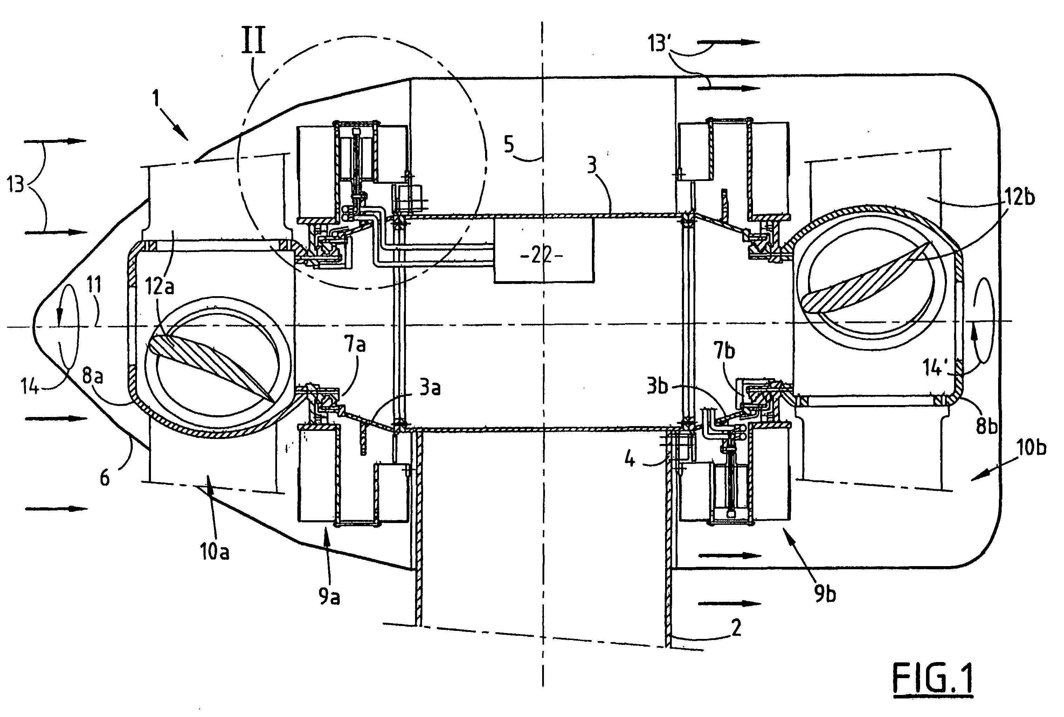

Sur la figure 1, on voit un dispositif de captage suivant l'invention désigné de manière générale par le repère 1.

On a représenté sur la figure 1 uniquement la partie supérieure du mât 2 du dispositif de captage portant la nacelle 3 à son extrémité supérieure, par l'intermédiaire d'un palier 4 permettant un montage rotatif autour de l'axe vertical 5, de la nacelle 3, sur la partie supérieure du mât 2.

Le mât 2, dont on n'a représenté que la partie supérieure sur la figure 1, peut présenter une très grande hauteur, par exemple une hauteur de l'ordre de 40 m, la partie inférieure du mât étant fixée dans un massif d'ancrage sur le sol du site de production d'énergie éolienne.

Une enveloppe de carénage 6, de forme profilée, est fixée autour de la structure de la nacelle 3. La forme du carénage 6 est choisie en particulier pour satisfaire des exigences d'esthétique de l'éolienne.

La nacelle 3 comporte, de part et d'autre de l'axe vertical 5 du mât 2, autour duquel elle est montée rotative, deux prolongements 3a et 3b sur lesquels sont montés respectivement, par l'intermédiaire de paliers 7a et 7b, un premier moyeu 8a d'une première hélice 10a du dispositif de captage et un second moyeu 8b d'une seconde hélice 10b.

La première hélice 10a permet d'assurer l'entrainement du rotor d'un premier générateur électrique 9a et la seconde hélice 10b permet d'assurer l'entraînement en rotation du rotor d'un second générateur électrique 9b du dispositif de captage. La première hélice 10a et le premier générateur 9a constituent une première unité de captage et de production d'énergie électrique et la seconde hélice 10b et le second générateur 9b constituent une seconde unité de captage et de production d'énergie électrique du dispositif de captage 1.

Les paliers 7a et 7b de montage rotatif des moyeux 8a et 8b présentent un axe commun 11 sensiblement horizontal qui est dirigé suivant la direction générale de circulation du vent, pendant le fonctionnement de l'èolienne. La circulation du vent a été représentée de manière conventionnelle par les flèches 13 en amont de la première hélice 10a et 13', en amont de la seconde hélice 10b.

De manière générale, les hélices 10a et 10b et les générateurs 9a et 9b constituant les unités de captage sont montées sur la nacelle 3, dans des dispositions symétriques par rapport à l'axe vertical 5 du mât 2.

La première hélice 10a est disposée face au vent représenté par les flèches 13 et la seconde hélice 10b est disposée sous le vent, par rapport à la première hélice 10a, de manière à recevoir le vent rèsiduel ayant traversé la première hélice, représenté par les flèches 13', les deux hélices 10a et 10b étant alignées dans la direction du vent. Les hélices 10a et 10b sont montées rotatives sur la nacelle 3, de manière totalement indépendante l'une de l'autre, aucun dispositif mécanique de liaison n'étant prévu entre les deux hélices.

Chacune des hélices 10a et 10b est constitue par le moyeu correspondant 8a ou 8b et par un jeu de pales respectives 12a ou 12b fixées de manière rigide dans des directions sensiblement radiales sur le moyeu 8a ou 8b.

Chacun des rotors peut comporter par exemple deux ou trois pales radiales fixées à 180° ou à 120° l'une de l'autre autour de l'axe 11 de rotation des moyeux.

Comme il est visible dans la partie centrale de la figure 1, les pales 12a et 12b présentent une forme profilée en section transversale par un plan parallèle à l'axe de rotation de l'hélice.

Les profils des pales 12a et 12b ont des dispositions inversées, de telle sorte que le vent fasse tourner les deux hélices en sens inverses. Les deux hélices sont donc dites contrarotatives. On a représenté par les flèches circulaires 14 et 14' le sens de rotation de la première hélice 10a et de la seconde hélice 10b, respectivement.

Chacun des générateurs électriques 9a et 9b est réalisé sous forme discoïde et comporte deux rotors solidaires en rotation de l'hélice correspondante et un double stator fixé sur une partie de la nacelle 3.

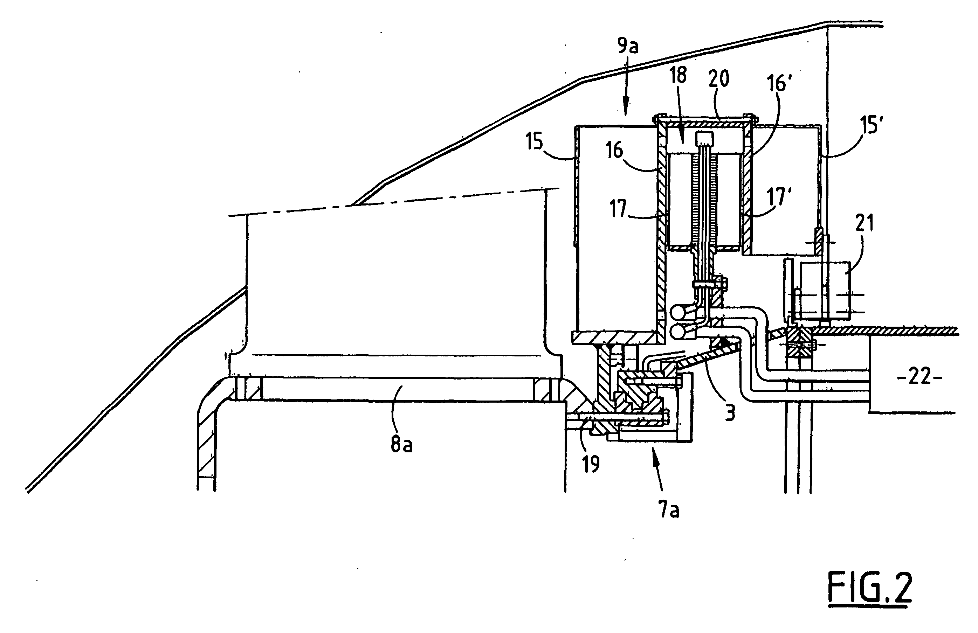

Les deux générateurs électriques 9a et 9b dont la disposition est symétrique par rapport à l'axe 5 sont réalisés de la même manière, de sorte qu'on ne décrira de manière détaillée que le générateur 9a de la première unité de captage, en se référant à la figure 2.

Le générateur 9a, réalisé sous forme discoïde comporte deux stators 15 et 15' de forme générale annulaire et comportant une partie 16 ou 16' en forme de disque plat portant sur sa face externe dirigée vers le stator des aimants permanents 17 ou 17'. Les disques 18 et 16' des rotors 18 et 15' sont solidaires d'un corps de rotor creux annulaire renfermant un noyau feuilleté constitué par un empilage de tôles. Le rotor 15 est directement fixé sur le moyeu 8a par des vis 19 assurant également la fixation de la partie interne tournante du palier 7a de montage rotatif du moyeu 8a et de l'hélice 10a.

La partie fixe externe du palier 7a est solidaire d'une partie de la nacelle 3 sur laquelle est également fixé le stator 18 de forme globale annulaire présentant deux faces planes discoïdes placées en vis-à-vis des faces planes discoïdes des stators 16 et 16' portant les aimants permanents 17 et 17',

Les deux rotors 15 et 15' sont rendus solidaires par l'intermédiaire de vis assurant le serrage. des disques 16 et 16' des stators contre une couronne périphérique 20 en plusieurs parties. Le maintien des rotors dans la direction axiale, est assuré par des paliers de butée associés au palier tournant 7a et par un double palier de butée 21 assurant la retenue du rotor dans la direction axiale et dans deux directions opposées.

Le stator 18 comporte deux parties faisant face respectivement au rotor 16 et au rotor 16' qui sont constituées chacune par un noyau en tôle feuilleté dans lequel sont montés des bobinages faisant face aux aimants permanents 17 et 17' des rotors 16 et 16'.

Les bobinages du stator 20 sont reliés par des conducteurs électriques à des moyens de connexion du générateur à une ligne d'utilisation du courant produit. Les bobinages du stator sont également reliés à un coffret 22 solidaire de la nacelle 3 renfermant une électronique de puissance permettant de commander le générateur électrique et d'assurer le réglage de la vitesse de rotation des rotors 15 et 15'.

Bien entendu, le second générateur électrique 9b est relié de la même manière que le premier générateur électrique à une électronique de puissance qui peut être disposée dans le coffret 22, de manière qu'on puisse réaliser de manière totalement indépendante, la commande du premier et du second générateurs électriques et le réglage de vitesse du rotor du premier générateur et de la première hélice et du rotor du second générateur et de la seconde hélice.

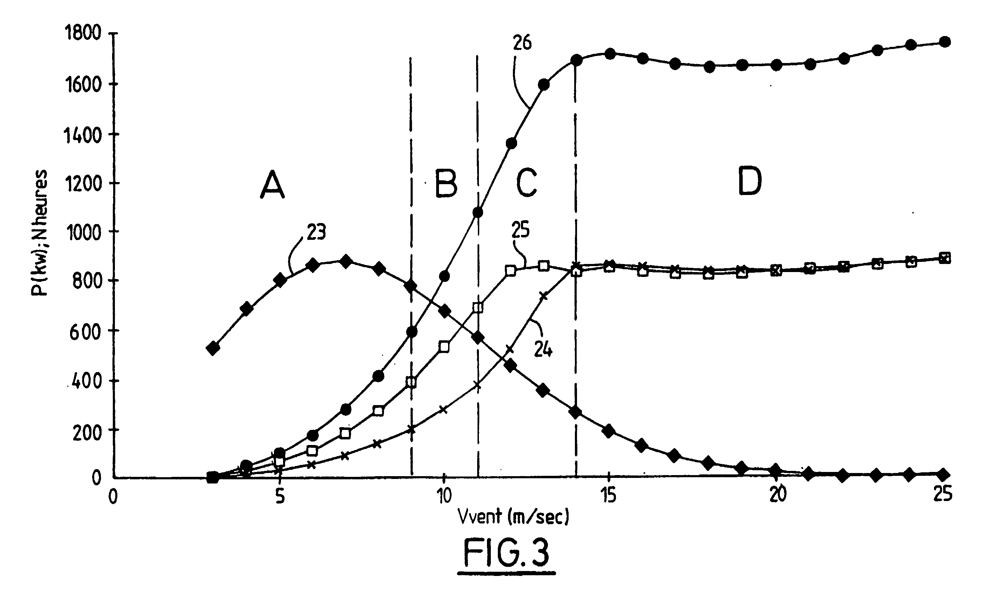

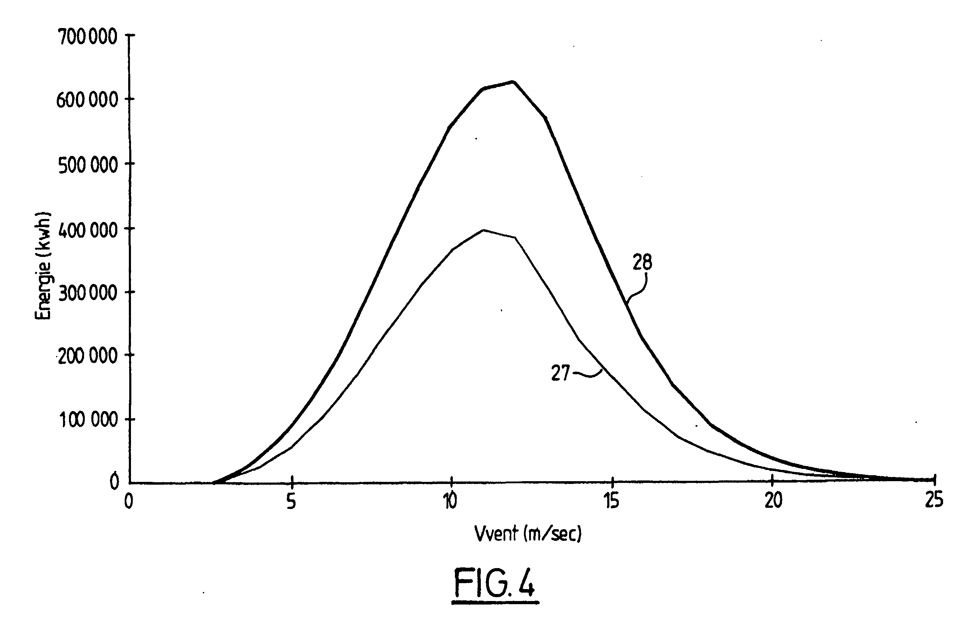

On va maintenant décrire, en se référant à la figure 3 et à la figure 4, le procédé de réglage du dispositif de captage suivant l'invention, par réglage de la vitesse des rotors des générateurs et des hélices des deux unités de captage du dispositif suivant l'invention.

Sur la figure 3, on a représenté sous la forme d'une courbe 23, le nombre d'heures (figurant en ordonnée) pendant une période de référence d'un an, pendant lesquelles le vent auquel est soumis le dispositif de captage suivant l'invention présente une vitesse qui est indiquée en abscisse. En réalité, chacun des points donnant un nombre d'heures avec une certaine vitesse de vent correspond à une plage de vitesses d'une amplitude d'un mètre/seconde.

La courbe 23 est représentative de la répartition des vitesses du vent au cours de l'année sur le site sur lequel est montée l'éolienne. La courbe 23 comporte un point initial sur la gauche de la figure 3, correspondant à une vitesse de l'ordre de 3 m/seconde qui est la vitesse de vent nécessaire pour le démarrage de l'éolienne. On a également porté sur la figure 3, sous la forme des courbes 24 et 25, la puissance fournie respectivement par la première unité de captage et par la seconde unité de captage du dispositif suivant l'invention, en fonction de la vitesse du vent.

Enfin, on a représenté par la courbe 26 la puissance totale fournie par le dispositif, c'est-à-dire la somme des puissances fournies par la première et par la seconde unités de captage du dispositif.

Comme il est visible sur la figure 3, le démarrage des deux unités de captage se produit pour une vitesse du vent de l'ordre de 3 m/seconde et les hélices des unités de captage tournent à une vitesse croissante, lorsque la vitesse du vent augmente. Corrélativement, une puissance croissante est produite par chacune des unités de captage.

Dans une première zone A, la vitesse de la partie tournante de la première unité de captage disposée face au vent augmente jusqu'à atteindre une vitesse correspondant au début de la régulation par décrochage aérodynamique de la partie tournante de la première unité de captage. La vitesse à laquelle commence le décrochage aérodynamique est d'à peu près 9 m/seconde. Ce décrochage peut être commandé ou obtenu de manière automatique, lorsque la vitesse du vent atteint la limite qui est déterminée par les caractéristiques de la première unité de captage.

Dans les conditions de fonctionnement de la zone A, la première unité de captage travaille à son rendement maximal, le coefficient de puissance CP ou coefficient de Betz étant maximal. On définit le coefficient de puissance ou coefficient de Betz comme le rapport de l'énergie récupérée sur l'énergie maximale récupérable qui représente approximativement 60% de l'énergie cinétique du vent.

Du fait que la première unité de captage fonctionne à son rendement maximal, la seconde unité de captage ne dispose, pour son entraînement en rotation, que d'une fraction de l'énergie cinétique récupérable, cette fraction représentant par exemple de 50 à 80 % de l'énergie absorbée par la première unité de captage.

Sur la figure 3, on a représenté le cas où la seconde unité de captage ne dispose que de 50 % de l'énergie captée par la première unité de captage. La vitesse de rotation de la partie tournante de la deuxième unité de captage est adaptée à la vitesse du vent pour que cette seconde unité de captage travaille au coefficient CP maximal.

Dans la zone A, la puissance totale récupérée est, dans ce cas, égale à une fois et demi la puissance captée par la première unité de captage. Le gain en puissance dû à la deuxième unité de captage est donc, dans ce cas, d'environ 50 % dans la zone A.

A la suite de la zone A, on a représenté, sur le graphique de la figure 3, une zone B allant du point de décrochage aérodynamique de la première unité de captage (pour une vitesse du vent de l'ordre de 9 m/seconde) jusqu'au point de décrochage aérodynamique de la seconde unité de captage (pour une vitesse du vent de l'ordre de 11 m/seconde).

Dans cette zone B, la partie tournante de la première unité de captage commence à décrocher aérodynamiquement et plus le vent augmente, plus la partie tournante de la première unité de -captage décroche ; il En résulte que l'énergie cinétique résiduelle récupérable par la partie tournante de la deuxième unité de captage augmente jusqu'au point de décrochage de la partie tournante de la seconde unité de captage pour une vitesse (par exemple 11 m/seconde) qui est fonction des caractéristiques de la seconde unité de captage. Dans la zone B, la seconde unité de captage fonctionne au CP maximal.

Dans la zone suivante C, les deux unités de captage fonctionnent dans des conditions de décrochage -croissant, la première unité de captage atteignant un décrochage maximal avant la seconde unité de captage, de telle sorte que le gain en puissance amené par la partie tournante de la seconde unité de captage progresse dans la zone C de 50 % pour la vitesse de début de décrochage à 100 % pour la vitesse du vent (à peu près 14 m/seconde) pour laquelle les parties tournantes des deux unités de captage sont en décrochage aérodynamique.

Par la suite, jusqu'aux vitesses de vent les plus élevées-(zone D), les deux unités de captage apportent la même-contribution à la puissance totale fournie par le dispositif de captage.

Il apparaît donc que le réglage de vitesse réalisé de manière indépendante sur les parties tournantes de chacune des unités de captage permet d'effectuer pour toute vitesse du vent, une optimisation du dispositif de captage, de manière que la puissance fournie par ce dispositif -soit la plus élevée possible, compte tenu de la valeur de l'énergie éolienne récupérable.

La régulation de vitesse des parties tournantes des unités de captage est réalisée à partir de l'électronique de puissance associée au générateur électrique de ces unités de captage.

Sur la figure 4, on a représenté, sous la forme d'une courbe 27, l'énergie produite dans la période de référence d'un an par la première unité de captage, en fonction de la vitesse du vent et, sous la forme d'une courbe 28, l'énergie produite annuellement par l'ensemble du dispositif comportant la première et la seconde unités de captage, en fonction de la vitesse du vent.

Les courbes 27 et 28 sont obtenues à partir de la courbe 23 et respectivement des courbes 24 et 26, par multiplication des puissances fournies par le nombre d'heures correspondant à la vitesse du vent.

L'utilisation d'une seconde unité de captage montée sur la nacelle de l'éolienne à la suite de la première unité de captage permet d'augmenter la récupération d'énergie d'environ 60 % à 70 % par rapport à l'utilisation d'une seule unité de captage comportant une partie tournante ayant le même diamètre et les mêmes caractéristiques aérodynamiques que la partie tournante de l'unité de captage utilisée de manière complémentaire.

La régulation de vitesse des parties tournantes des unités de-captage permet d'optimiser la récupération d'énergie sur chacune des unités de captage et en particulier de faire fonctionner la seconde unité de captage, de manière optimale pour la récupération de énergie récupérable qui n'est pas captée par la première unité de captage.

Le dispositif et le procédé suivant l'invention permettent donc d'augmenter la puissance installée d'un dispositif de captage d'énergie éolienne, en utilisant l'une à la suite de l'autre une première et une seconde unités de captage et d'augmenter l'énergie produite pendant une période de référence par régulation de la première et de la seconde unités de captage.

Le dispositif suivant l'invention présente d'autre part une bonne compacité, malgré l'utitisation de deux unités de captage disposées l'une à la suite de l'autre. Cette compacité est obtenue grâce à l'utilisation de générateurs électriques discoïdes.

En outre, le dispositif de captage selon l'invention ne comporte pas de parties mécaniques complexes et fragiles et la régulation de la vitesse des parties tournantes des unités de captage est réalisée entièrement par des moyens électroniques.

L'invention ne se limite pas strictement au mode de réalisation qui a été décrit.

C'est ainsi que les hélices et les générateurs électriques des unités de captage peuvent être réalisés sous une forme différente.

Les hélices des unités de captage peuvent comporter un nombre quelconque de pales dont la longueur peut être choisie dans un vaste intervalle.

Le générateur électrique peut comporter un seul rotor et un seul stator ou, au contraire, une ou plusieurs unités comportant eux-mêmes un ou plusieurs rotors et un ou plusieurs stators.

L'électronique de puissance de commande des générateurs électriques et de régulation de la vitesse des rotors liés aux hélices peut être réalisée par tout moyen connu de l'homme du métier.

L'invention s'applique à la fabrication et à l'exploitation de toute éolienne de production de courant électrique.

## Revendications

1. Dispositif de captage d'énergie éolienne pour la production d'énergie électrique comportant un mât vertical (2), une nacelle (3) montée rotative autour d'un axe vertical (5) sur la partie supérieure du mât (2) et au moins une unité de captage comportant au moins une hélice (10a, 10b) constituée d'un moyeu (8a, 8b) monté rotatif sur la nacelle (3) autour d'un axe (11) sensiblement horizontal et au moins deux pales (12a, 12b) fixées sur le moyeu (8a, 8b) dans des directions sensiblement radiales et un générateur électrique (9a, 9b) ayant au moins un rotor (15, 15') solidaire en rotation de l'hélice (10a, 10b) et au moins un stator (16) fixé sur la nacelle (3), le dispositif comportant une première et une seconde unités de captage comprenant respectivement une première et une seconde hélices (10a, 10b) contrarotatives disposées de part et d'autre de l'axe vertical (5) du mât et étant **caractérisé par** le faît que les moyeux (8a,8b) sont montés rotatifs de manière indépendante l'un de l'autre autour d'axes alignés et qu'il comporte un premier et un second générateurs électriques (9a, 9b) réalisés sous forme discoïde comprenant chacun:
- au moins un rotor (15, 15') ayant au moins une partie en forme de disque solidaire de l'hélice (10a, 10b) correspondante,
- au moins un stator (16) ayant au moins une partie en forme de disque en vis-à-vis du rotor (15, 15'), et
- des moyens électroniques de puissance (22) associés aux générateurs (9a, 9b), permettant le réglage de la vitesse du rotor (15, 15'), de manière indépendante sur chacune des unités de captage.

2. Procédé d'optimisation de l'énergie et de la puissance produite par un dispositif de captage d'énergie éolienne selon la revendication 1, **caractérisé par le fait qu'**on effectue, en utilisant les moyens électroniques de puissance (22), le réglage de la vitesse du rotor (15, 15') et de l'hélice (10a, 10b) de chacune des unités de captage, en fonction de la vitesse du vent

3. Procédé suivant la revendication 2, **caractérisé par le fait que**, dans une première zone de fonctionnement A, pour des vitesses du vent allant de la vitesse de démarrage des unités de captage jusqu'à une vitesse à laquelle on réalise le décrochage aérodynamique de la partie tournante de la première unité de captage, on fait fonctionner la première et la seconde unités de captage dans des conditions de rendement maximales, et qu'on régule ensuite la vitesse des parties tournantes des unités de captage, pour régler le décrochage aérodynamique de la partie tournante de la première unité de captage et la récupération d'énergie résiduelle par la partie tournante de la seconde unité de captage, de manière que l'accroissement de puissance et d'énergie produite par la seconde unité de captage atteigne progressivement la valeur de la puissance et de l'énergie récupérée par la première unité de captage, pour des vitesses de vent croissantes.

4. Procédé suivant la revendication 3, **caractérisé par le fait que** l'accroissement de puissance et d'énergie produite par la seconde unité de captage passe, après le début du décrochage de la partie tournante de la première unité de captage, progressivement, de 50% à 100% de la puissance et l'énergie produite par la première unité de captage.

## Patentansprüche

1. Vorrichtung zur Gewinnung von Windenergie für die Herstellung von elektrischer Energie mit einem senkrechten Mast (2), einer Gondel (3), die um eine senkrechte Achse (5) drehbar auf dem oberen Teil des Mastes (2) montiert ist, und wenigstens eine Gewinnungseinheit mit wenigstens einem Flügelrad (10a,10b), die gebildet wird durch eine um eine im wesentlichen waagerechte Achse (11) drehbar an der Gondel (3) angebrachte Nabe (8a,8b) und wenigstens zwei Flügel (12a,12b), die an der Nabe (8a,8b) in im wesentlichen radialer Richtung befestigt sind, sowie einem elektrischen Generator (9a,9b), der wenigstens einen Rotor (15,15') aufweist, der fest und drehbar mit dem Flügelrad (14a,10b) verbunden ist, sowie wenigstens einem Stator (16), der an der Gondel (3) befestigt ist, welche Vorrichtung erste und zweite Leistungsgewinnungseinheiten umfasst, die eine erste und ein zweites Flügelrad (10a,10b) aufweisen, die in Gegenrichtung drehbar auf beiden Seiten der vertikalen Achse (5) des Mastes (2) angeordnet sind und **dadurch gekennzeichnet sind, dass** die Naben (8a,8b) unabhängig voneinander drehbar in Bezug auf ausgerichtete Achsen angeordnet sind und einen ersten und einen zweiten elektrischen Generator (9a,9b) umfassen, die diskusförmig ausgebildet sind und jeweils umfassen:
- wenigstens einen Rotor (15, 15'), der wenigstens einen schelbenförmigen Teil aufweist, der mit dem entsprechenden Flügelrad (10a,10b) fest verbunden ist.
- wenigstens einen Stator (16), der wenigstens einen scheibenförmigen Tell gegenüber dem Rotor (15,15') aufweist, und
- elektrische Letstungseinrichtungen (22), die den Generatoren (9a,9b) zugeordnet sind und die Regelung der Geschwindigkeit des Rotors (15,15') unabhängig für jede Leistungseinheit gestatten.

2. Verfahren zur Optimierung der Energie und der Leistung, die durch eine Windenergie-Gewinnungseinrichtung erzeugt wird, gemäß Anspruch 1, **dadurch gekennzeichnet, dass** unter Verwendung der elektronischen Leistungseinrichtungen (22) die Geschwindigkeit des Rotors (15,15') und des Flügelrades (10a,10b) jeder der Leistungsgewinnungseinheiten in Funktion der Windgeschwindigkeit geregelt wird.

3. Verfahren nach Anspruch 2, **dadurch gekennzeichnet, dass** in einem ersten Funktionsbereich (A) für Windgeschwindigkeiten, die von der Startgeschwindigkeit der Leistungsgewinnungseinhelten bis zu einer Geschwindigkeit reichen, bei der ein aerodynamischer Abriss des drehenden Teils der ersten Leistungsgewinnungseinheit erfolgt, die erste und zweite Leistungsgewinnungseinheit unter Konditionen des maximalen Gewinnes betrieben werden, und dass anschließend die Geschwindigkeit der drehenden Teile der Leistungsgewinnungseinheit zur Regelung des aerodynamischen Abrisses des drehenden Teils der ersten Leistungsgewinnungseinheit und die Gewinnung der Restenergie durch das drehende Teil der zweiten Leistungsgewinnungseinheit so geregelt wird, dass die Zunahme der durch die zweite Letstungsgewinnungseinheit gewonnenen Energie nach und nach den Wert der Leistungsgewinnung durch die erste Leistungsgewinnungseinheit für zunehmende windgeschwindigkeiten erreicht.

4. Verfahren nach Anspruch 3, **dadurch gekennzeichnet, dass** die Zunahme der Energiegewinnung durch die zweite Leistungsgewinnungseinheit nach Beginn des Ausfalls des drehenden Teils der ersten Leistungsgewinnungseinheit nach und nach von 50 % auf 100 % der Energicgewinnung durch die erste Leistungsgewinnungseinheit steigt.

## Claims

1. Device for the capture of wind energy in order to produce electrical energy, said device comprising a vertical mast (2), a nacelle (3) mounted so as to rotate about a vertical axis (5) on the upper portion of the mast (2) and at least one capture unit comprising at least one turbine (10a, 10b) consisting of a hub (8a, 8b) mounted on the nacelle (3) so as to rotate about a substantially horizontal axis (11) and at least two blades (12a, 12b) attached to the hub (8a, 8b) in substantially radial directions and an electric generator (9a, 9b) having at least one rotor (15, 15') which is integral to the rotation of the turbine (10a, 10b) and at least one stator (16) attached to the nacelle (3), the device also comprising a first and a second capture unit including respectively a first and a second turbine (10a, 10b) arranged to counter-rotate on either side of the vertical axis (5) of the mast (2), and being **characterised in that** the hubs (8a, 8b) are mounted so as to rotate independently of one another about aligned axes and **in that** it includes a first and second electric generator (9a, 9b) realised in discoid form and each comprising:
at least one rotor (15, 15') having at least one portion in disc form integral with the corresponding turbine (10a, 10b),
at least one stator (16) having at least one portion in disc form facing the rotor (15, 15'), and
power electronic means (22) associated with the generators (9a, 9b) and allowing the speed of the rotor (15, 15') to be controlled independently for each capture unit.

2. Method for optimising the energy and power produced by a device for the capture of wind energy according to claim 1, **characterised in that** the speed of the rotor (15, 15') and of the turbine (14a, 10b) of each capture unit is controlled as a function of wind speed by power electronic means (22).

3. Method according to claim 2, **characterised in that** in a first operating range A, for wind speeds between the speed required to start the capture units and the speed at which aerodynamic stalling of the turning portion of the first capture unit comes into play, the first and second capture units are operated in conditions of maximum yield, and **in that** the speed of the turning parts of the capture units is then controlled, in order to adjust the aerodynamic stalling of the turning portion of the first capture unit and the recovery of residual energy by the turning portion of the second capture unit, in such a way that the increase in power and energy produced by the second capture unit progressively reaches the value of the power and the energy recovered by the first capture unit, as wind speeds increase.

4. Method according to claim 3, **characterised in that** the increase in power and energy produced by the second capture unit moves up, after the start of stalling of the turning portion of the first capture unit, progressively, from 50% to 100% of the power and energy produced by the first capture unit.
